# EUROPÄISCHE PATENTSCHRIFT

(11) **EP 1 413 781 B1**
(45) Veröffentlichungstag und Bekanntmachung des Hinweises auf die Patenterteilung: **27.01.2010**
(21) Anmeldenummer: 03021594.1
(22) Anmeldetag: 25.09.2003
(51) Int. Cl.: F16C 13/00

(54) **Biegeausgleichswalze und Verfahren zum Betreiben einer Biegeausgleichswalze**
Controlled deflection roll and method of operating said controlled deflection roll
Rouleau à compensation de flèche et procédé de fonctionnement de ce rouleau à compensation de flèche

(30) Priorität: 24.10.2002 DE 10249483
(43) Veröffentlichungstag der Anmeldung: 28.04.2004
(73) Patentinhaber: Voith Patent GmbH, 89522 Heidenheim (DE)
(72) Erfinder: van Haag, Rolf, Dr.-Ing., 47647 Kerken (DE)

(56) Entgegenhaltungen:
- DE-A1- 3 625 802
- DE-A1- 4 030 190
- DE-A1- 19 616 802
- DE-C1- 4 429 499
- DE-C1- 19 540 791
- US-A- 4 570 314

## Beschreibung

Die Erfindung betrifft eine Biegeausgleichswalze mit einem Walzenmantel, der um einen feststehenden Träger drehbar ist, wobei zwischen dem Walzenmantel und dem Träger ein Ringraum ausgebildet ist, und mit einer Druckfluid-betätigten, auf den Walzenmantel wirkenden Druckbeaufschlagungseinrichtung, die einen Druckflüssigkeits-Anschluß und einen Druckgas-Anschluß aufweist, wobei beide Anschlüsse gleichzeitig zur Druckbeaufschlagung des Walzenmantels aktivierbar sind und der Druckgas-Anschluß mit dem Ringraum in Verbindung steht und der Druckflüssigkeits-Anschluß mit mindestens einem Stützelement in Verbindung steht, das zwischen dem Träger und dem Walzenmantel angeordnet ist. Ferner betrifft die Erfindung ein Verfahren zum Betreiben einer Biegeausgleichswalze, die einen um einen feststehenden Träger drehbaren Walzenmantel aufweist, wobei zwischen dem Walzenmantel und dem Träger ein Druck mit einer veränderbaren Verteilung eingestellt wird, bei dem man die Druckverteilung mit Hilfe eines Druckgases, das auf vorbestimmte erste Bereiche des Walzenmantels wirkt, und mit Hilfe einer Druckflüssigkeit, die auf vorbestimmte zweite Bereiche des Walzenmantels wirkt, erzeugt.

Eine derartige Walze und ein derartiges Verfahren sind aus DE 36 25 802 A1 bekannt. Man verwendet diese Walze zur Herstellung von Wellpappen. Es sind Dichtelemente vorgesehen, die bestimmte Bereiche auf der einem Nip gegenüberliegenden Seite aussparen, um einen Druck im Nip zu erzeugen.

Biegeausgleichswalzen, die auch als Biegeeinstellwalzen oder Durchbiegungseinstellwalze bezeichnet werden, werden in einem Kalander oder in einer vergleichbaren Walzenmaschine verwendet, wo sie mit anderen Walzen zusammenwirken. Zusammenwirkende Walzen bilden einen Nip, durch den eine Materialbahn, beispielsweise eine Papier- oder Kartonbahn, geführt werden kann, um dort mit erhöhtem Druck und gegebenenfalls auch mit erhöhter Temperatur beaufschlagt zu werden.

Ohne zusätzliche Maßnahmen ist es praktisch nicht möglich, über die gesamte axiale Länge der Walzen eine gleichmäßige Druckbeaufschlagung zu erzielen. Beispielsweise biegen sich die Walzen aufgrund ihres Eigengewichts etwas durch, was die Druckverteilung negativ beeinflußt. In früheren Zeiten versuchte man, diesen Erscheinungen durch Bombieren der unteren Walze abzuhelfen, was jedoch nur für eine bestimmte Lastverteilung den gewünschten Erfolg gebracht hat.

Man hat daher Walzen mit steuerbarer Streckenlast entwickelt, bei denen sich der Walzenmantel über eine Reihe von Stützelementen auf dem Träger abstützt. Durch eine entsprechende Druckbeaufschlagung der einzelnen Stützelemente läßt sich eine Druckverteilung einstellen.

DE 44 29 499 C1 zeigt eine weitere Walze. Die Stützelemente sind als Ringelemente mit einer ringförmigen Tasche ausgebildet, die mit hydraulischer Flüssigkeit unter Druck gespeist wird, um eine hydrostatische Abstützung des Walzenmantels auf dem Stützelement zu ermöglichen. Das Stützelement umschließt einen Innenraum, der mit einer ein einstellbares Drosselorgan aufweisenden Ablaufleitung in Verbindung steht. Außerhalb des Stützelements kann ein Flüssigkeitsdruck erzeugt werden, der größer oder kleiner ist als der Druck im Innenraum des Stützelements.

EP 0 347 549 B1 beschreibt eine andere Durchbiegungseinstellwalze, bei der ebenfalls der Ringraum mit Flüssigkeit gefüllt werden kann. Stützelemente sind vorgesehen, die aus dem Druck der Flüssigkeit gewisse Bereiche aussparen können, um eine negative Beaufschlagung des Walzenmantels mit Druck zu realisieren.

US 4 570 314 A zeigt eine Pressenwalze mit einem leicht verformbaren Mantel, der über ein Stützelement geführt ist. Das Stützelement drückt den Mantel unter Verformung gegen eine Gegenwalze. Durch den Nip zwischen dem Mantel und der Gegenwalze wird eine Papierbahn und ein Filz geführt.

DE 40 30 190 A1 beschreibt ein Verfahren zur Reduzierung des Leistungsverbrauchs einer durchbiegungskompensierten Walze, bei der der Innenraum des Walzenmantels durch Dichtelemente, die an einem den Walzenmantel durchsetzenden Träger angeordnet sind, in zwei Abschnitte aufgeteilt ist. Ein Abschnitt wird mit Hydraulikflüssigkeit unter Druck beaufschlagt. Im anderen Abschnitt ist an der tiefsten Stelle eine Ölaustragsvorrichtung angeordnet, die durch einen Schaber gebildet ist.

DE 195 40 791 C1 beschreibt eine durchbiegungssteuerbare Walze für einen Kalander, bei dem ein Schaltventil in der Ablaufleitung aus dem Ringraum zwischen Walzenmantel und Träger angeordnet ist. Dieses Schaltventil ist als zur Ablaufseite hin öffnendes Rückschlagventil ausgebildet. Die Ablaufseite dieses Rückschlagventils kann wahlweise mit einem Öffnungsdruck unterhalb des Drucks im Ringraum oder mit einem Sperrdruck oberhalb des Drucks im Ringraum beaufschlagt werden.

DE 196 16 802 A1 zeigt eine Durchbiegungseinstellwalze mit einem umlaufenden Walzenmantel, einem den Walzenmantel axial durchsetzenden Joch und mehreren, in Axialrichtung voneinander beabstandeten hydraulischen Stützelementen, durch die der Walzenmantel am Joch unter Ausbildung eines Fluidpolsters abgestützt ist. Um die Flüssigkeit, die in den Zwischenraum zwischen dem Joch und dem Walzenmantel gelangt, abfördern zu können, ist ein Schöpfer vorgesehen, der die unter der Wirkung der Zentrifugalkraft am Innenumfang des Walzenmantels anliegende Flüssigkeit abschöpft und in eine Auffangwanne leitet.

Der Erfindung liegt die Aufgabe zugrunde, Planschverluste klein zu halten.

Diese Aufgabe wird bei einer Biegeausgleichswalze der eingangs genannten Art dadurch gelöst, daß eine Flüssigkeits-Abführeinrichtung mit dem Ringraum verbunden ist, die eine Steuereinrichtung aufweist, die den Abfluß der Druckflüssigkeit steuert, wobei die Steuereinrichtung mit einem Druckgas-Verbrauchssensor verbunden ist und den Ablauf der Druckflüssigkeit in Abhängigkeit vom Druckgas-Verbrauch regelt und/oder die Steuereinrichtung mit einer Meßeinrichtung verbunden ist, die eine Leistung eines Walzenantriebs ermittelt, und den Ablauf der Druckflüssigkeit in Abhängigkeit von der Leistung regelt.

Man beschränkt den Druckaufbau auf den Walzenmantel also nicht mehr auf eine einzige Fluidart, sondern verwendet gleichzeitig ein Druckgas und eine Druckflüssigkeit zur Druckbeaufschlagung des Walzenmantels. Dadurch lassen sich die Druckbeaufschlagungsmöglichkeiten des Walzenmantels erweitern. Eine Einstellung des Druckverlaufs in axialer Richtung der Walze ist nun in einem weiteren und vielfach auch in einem feinfühligeren Maß möglich. Wenn der Druckgas-Anschluß mit dem Ringraum und der Druckflüssigkeits-Anschluß mit mindestens einem Stützelement in Verbindung steht, das zwischen dem Träger und dem Walzenmantel angeordnet ist, ist dies unter energetischen Gesichtspunkten von erheblichem Vorteil. Man kann den Walzenmantel insgesamt unter Druck setzen und mit Hilfe der Stützelemente bestimmte Bereiche von der Druckbeaufschlagung aussparen, ohne daß man die Nachteile in Kauf nehmen muß, die mit einer Flüssigkeitsfüllung des Walzenmantels verbunden sind. Dieser sogenannte "Senkenbetrieb" erlaubt es, eine sehr feinfühlige Steuerung der Streckenlast im Nip vorzunehmen. Wenn der Ringraum mit Flüssigkeit gefüllt ist, dann stellt sich bei einer Rotation des Walzenmantels eine große Flüssigkeitsreibung ein, für die eine entsprechende Antriebsleistung zur Verfügung gestellt werden muß. Diese auch als "Planschleistung" bezeichnete Antriebsleistung ist so groß, daß insbesondere bei schnellaufenden Walzen ein derartiger Senkenbetrieb mit vernünftigen Energieaufwand bislang nicht möglich ist. Wenn man hingegen die Druckbeaufschlagung über ein Druckgas vornimmt, dann kann man die Planschleistung in ganz erheblichem Umfang vermindern, so daß man die Vorteile eines Senkenbetriebs mit einer geringen Antriebsleistung kombinieren kann. Auch dann, wenn im Ringraum ein erhöhter Gasdruck herrscht, ist es praktisch nicht zu vermeiden, daß aus der hydrostatischen Lagertaschenanordnung ein gewisser Anteil von Hydraulikflüssigkeit in den Ringraum abfließt. Ohne zusätzliche Maßnahmen würde diese Hydraulikflüssigkeit dazu führen, daß sich der Ringraum zwischen Walzenmantel und Träger mit Hydraulikflüssigkeit füllt. Um dem entgegenzuwirken, ist die Flüssigkeits-Abführeinrichtung vorgesehen. Mit Hilfe dieser Abführeinrichtung läßt sich der Druck im Ringraum praktisch ausschließlich durch den Druck des Druckgases steuern. Man kann die Steuereinrichtung dazu verwenden, die Höhe des Flüssigkeitsfilmes oder der Flüssigkeitsschicht, die an der Innenseite des Walzenmantels anliegt, zu steuern und zwar so, daß die Mündung der Flüssigkeits-Abführeinrichtung in vorbestimmtem Maße von der Flüssigkeit im Ringraum abgedeckt ist. Eine relativ einfache Überwachungsmöglichkeit besteht darin, den Verbrauch des Druckgases zu erfassen. Wenn die Mündung der Flüssigkeitsabführeinrichtung zu weit freigegeben ist, dann wird eine entsprechend große Menge von Druckgas durch die Flüssigkeits-Abführeinrichtung entweichen. In diesem Fall muß der Ablaufquerschnitt der Flüssigkeits-Abführeinrichtung gedrosselt werden. Wenn zu wenig Druckgas entweicht, dann besteht die Gefahr, daß sich der Ringraum langsam mit Flüssigkeit füllt. In diesem Fall muß die Flüssigkeits-Abführeinrichtung etwas mehr Flüssigkeit abfließen lassen. Im Grunde kann man die entsprechende Steuerung durch eine Zwei-Punkt-Regelung bewirken. Natürlich sind auch aufwendigere Regelungsmöglichkeiten vorstellbar. In vielen Fällen wird es sogar erwünscht sein, eine kleine Menge von Druckgas durch die Flüssigkeits-Abführeinrichtung entweichen zu lassen, um eine gut kontrollierbare Möglichkeit zur Einstellung des Flüssigkeitspegels an der Innenwand des Walzenmantels zu erhalten. Ein Teil des Druckgases, beispielsweise Druckluft, wird sich aber bereits mit der Druckflüssigkeit, beispielsweise Hydrauliköl, binden und in gebundener Form mit dem Druckgas entweichen. In einer alternativen oder zusätzlichen Ausgestaltung kann vorgesehen sein, daß die Steuereinrichtung mit einer Meßeinrichtung verbunden ist, die eine Leistung eines Walzenantriebs ermittelt, und den Ablauf der Druckflüssigkeit in Abhängigkeit von der Leistung regelt. In diesem Fall muß man eine geringe Steigerung der Antriebsleistung gegenüber der minimal möglichen tolerieren, kann aber den Luftverbrauch sehr gering halten. Die Flüssigkeitshöhe am Walzenmantel bestimmt die Antriebsleistung. Je größer diese Flüssigkeitshöhe ist, desto größer ist die Antriebsleistung. Der Zusammenhang muß nicht unbedingt linear sein, er kann jedoch durch Versuche eindeutig festgestellt werden. Wenn die Antriebsleistung dann über ein bestimmtes Maß hinaus ansteigt, dann muß die Flüssigkeits-Abführeinrichtung mehr Flüssigkeit aus dem Ringraum abfördern. Wenn die Antriebsleistung zu gering wird, dann muß der Abflußquerschnitt der Flüssigkeits-Abführeinrichtung entsprechend gedrosselt werden.

Vorzugsweise ist das Stützelement ringförmig ausgebildet und umschließt einen zum Walzenmantel hin offenen Innenraum, der mit einer Druckeinstelleinrichtung versehen ist. Damit kann man mit Hilfe des Stützelements einzelne Bereiche mit einem höheren Druck oder mit einem niedrigeren Druck als der Druck des Druckgases versehen. Man kann also den Druck lokal erhöhen oder lokal absenken, wodurch die Einstellmöglichkeiten der Biegeausgleichswalze ganz erheblich erweitert werden. Diese Einstellmöglichkeiten sind zwar aus der eingangs genannten DE 44 29 499 C2 prinzipiell bekannt. Dort war aber insbesondere der "Senkenbetrieb" nur bei niedrigen Drehzahlen möglich, weil bei höheren Drehzahlen, beispielsweise bei Arbeitsgeschwindigkeiten in der Größenordnung ab 1.500 m/min die Verlustleistung zu groß wurde.

Vorzugsweise liegt das Stützelement über eine hydrostatische Lagertaschenanordnung am Walzenmantel an, die eine den Innenraum gegenüber dem Ringraum abdichtende Dichtung bildet. Wenn man den Ringraum im Innern des Walzenmantels unter Druck setzt, muß man natürlich darauf achten, daß das Druckgas nicht unkontrolliert abfließt. Dies wird auch im Senkenbetrieb, bei dem der Innenraum des Stützelementes mehr oder weniger drucklos gehalten werden kann, auf einfache Weise dadurch sicher gestellt, daß die hydrostatische Lagertaschenanordnung am Stützelement als Dichtung dient. In der Lagertaschenanordnung liegt Hydraulikflüssigkeit unter einem vorbestimmten Druck an. Dieser Druck muß im Prinzip nur ausreichen, den Walzenmantel reibungsfrei am Stützelement abzudichten. Damit ist der Druck aber in der Regel bereits groß genug, um einen Übertritt von Druckgas aus dem Ringraum in den Innenraum des Stützelements zu verhindern. Gleichzeitig wird im Senkenbetrieb dafür gesorgt, daß der Teil der Hydraulikflüssigkeit, der über die Lagertaschenanordnung nach außen abfließt, klein wird. Die Hydraulikflüssigkeit wird vielmehr zum größeren Teil in den Innenraum verdrängt, wo sie abgeführt werden kann.

Vorzugsweise weist die Flüssigkeits-Abführeinrichtung mindestens einen dem Walzenmantel benachbarten Schöpfer auf. Hierbei trägt man der Tatsache Rechnung, daß die Biegeausgleichswalze besonders geeignet für höhere Geschwindigkeiten ist. Bei höheren Geschwindigkeiten legt sich aber die in den Ringraum übergetretene Flüssigkeit in Form einer Schicht an die Innenseite des Walzenmantels an. Ein Schöpfer, der in diese Schicht eingreift, kann die Flüssigkeit dann leicht abheben und zu einem Punkt befördern, wo die Flüssigkeit abfließen oder abgepumpt werden kann.

Hierbei ist besonders bevorzugt, daß die Flüssigkeits-Abführeinrichtung eine Mündung in den Ringraum mit einer vorbestimmten Maximalentfernung zur Innenseite des Walzenmantels aufweist. Auf diese Weise ist es relativ einfach möglich, zu verhindern, daß das Druckgas durch die Flüssigkeits-Abführeinrichtung in unerwünschtem Maße entkommen kann. Solange die Mündung von der Flüssigkeitsschicht abgedeckt ist, kann lediglich Flüssigkeit durch die Flüssigkeits-Abführeinrichtung abgeführt werden. Ein Vordringen von Druckgas ist nicht möglich. Es ist allerdings nicht erforderlich, die gesamte Mündung abzudecken. Man kann durchaus einen gewissen Gasverlust in Kauf nehmen, wenn die Mündung nicht vollständig von der Flüssigkeitsschicht abgedeckt ist. Die genauen Einzelheiten ergeben sich im Betrieb und können von einer Bedienungsperson leicht eingestellt werden.

Die Aufgabe wird bei einem Verfahren der eingangs genannten Art dadurch gelöst, daß man den Ablauf der Druckflüssigkeit beeinflußt, um die Flüssigkeitsfüllung auf einer vorbestimmten Höhe zu halten, wobei man einen Druckgas-Verbrauch als Kriterium für die Beeinflussung des Ablaufs der Druckflüssigkeit verwendet und/oder man eine Antriebsleistung als Kriterium für die Beeinflussung des Ablaufs der Druckflüssigkeit verwendet.

Mit dieser Ausgestaltung vergrößert man die Möglichkeit der Drucksteuerung bzw. der Steuerung der Druckverteilung. Man kann die Vorteile des Druckgases, beispielsweise eine geringere Reibung, in Kauf nehmen, ohne auf die Vorteile einer Druckerzeugung mit Hilfe einer Druckflüssigkeit, beispielsweise eines erhöhten oder erniedrigten Drucks, verzichten zu müssen. Über das Stützelement, das mit Hilfe der Druckflüssigkeit nicht nur unter Druck gesetzt, sondern auch gegenüber dem Walzenmantel geschmiert wird, tritt laufend eine gewisse Menge von Druckflüssigkeit in das Innere des Walzenmantels ein. Würde man nichts unternehmen, dann würde sich das Innere des Walzenmantels über kurz oder lang vollständig mit der Druckflüssigkeit füllen. Dies ist nicht erwünscht, weil man dann einen erhöhten Planschverlust in Kauf nehmen müßte. Andererseits würde der Verlust an Druckgas relativ groß, wenn man die Druckflüssigkeit sofort vollständig aus dem Inneren des Walzenmantels abfördert, weil dann die Mündungen einer Abfördereinrichtung freigegeben werden, so daß das Druckgas hier ohne Hinderung entweichen könnte. Wie oben erwähnt, ist ein zu großer Verbrauch von Druckgas ein Kriterium dafür, daß der Flüssigkeitspegel der Druckflüssigkeit am Walzenmantel zu klein ist und dementsprechend zu viel Druckgas durch die Abfördereinrichtung entweichen kann. Ist hingegen der Druckgasverbrauch zu klein oder wird sogar Druckgas zurückgespeist, dann ist das ein Zeichen dafür, daß sich mehr Druckflüssigkeit im Walzeninnern ansammelt, als dies gewünscht ist. Zusätzlich oder alternativ dazu kann man eine Antriebsleistung als Kriterium für die Beeinflussung des Ablaufs der Druckflüssigkeit verwenden. Wie oben ausgeführt, steigt mit zunehmendem Flüssigkeitspegel an der Innenwand des Walzenmantels die Antriebsleistung an, die notwendig ist, weil man bei einem höheren Flüssigkeitspegel auch eine höhere Planschleistung aufbringen muß. Der Zusammenhang zwischen dem Flüssigkeitspegel und der Antriebsleistung ist zwar in den meisten Fällen nicht linear, aber eindeutig. Man kann also anhand der aufgebrachten Antriebsleistung mit einer relativ guten Genauigkeit erkennen, wie hoch der Flüssigkeitspegel ist, und die Abförderung der Druckflüssigkeit entsprechend beeinflussen.

Vorzugsweise wirkt das Druckgas in einem Ringraum, der zwischen dem Walzenmantel und dem Träger ausgebildet ist, wobei die Druckflüssigkeit über mindestens ein Stützelement auf den Walzenmantel wirkt. Damit läßt sich der Walzenmantel "aufblasen", ohne daß man größere Planschverluste durch eine Flüssigkeitsreibung in Kauf nehmen müßte, was sich insbesondere bei höheren Geschwindigkeiten stark negativ bemerkbar macht.

Auch ist bevorzugt, daß man innerhalb des Stützelements einen Bereich mit gegenüber dem Druck des Druckgases verminderten Druck erzeugt. Dadurch läßt sich ein Senkenbetrieb realisieren, bei dem man ohne Gegenstützelemente die Kraft in einem Nip absenken kann.

Bevorzugterweise schöpft man Druckflüssigkeit aus dem Ringraum ab und sorgt dabei dafür, daß der Abfluß von Druckgas aus dem Ringraum unterhalb einer vorbestimmten Grenze bleibt. Mit anderen Worten sorgt man dafür, daß das Druckgas nur bis zu einem vorbestimmten Maß gemeinsam mit der Druckflüssigkeit aus dem Ringraum entweichen kann. Dies hält den Druckgasverlust klein und ermöglicht damit einen energetisch günstigen Betrieb.

Bevorzugterweise verwendet man zum Abschöpfen einen Schöpfer, dessen Ablauföffnung in einem vorbestimmten Ausmaß von einem Flüssigkeitsfilm abgedeckt ist. Der Flüssigkeitsfilm bildet sich ab gewissen Drehzahlen an der Innenseite des Walzenmantels von selbst aus. Man kann nun einen Schöpfer in diesen Flüssigkeitsfilm oder diese Flüssigkeitsschicht eintauchen, um die Flüssigkeit aus dem Ringraum, d.h. aus dem Inneren des Walzenmantels, abzufördern.

Die Erfindung wird im folgenden anhand eines bevorzugten Ausführungsbeispiels in Verbindung mit der Zeichnung näher beschrieben. Hierin zeigen:
- Fig. 1: einen schematischen Längsschnitt durch eine Biegeausgleichswalze,
- Fig. 2: eine vergrößerte Aussichtsansicht im Bereich eines Stützelements und
- Fig. 3: eine schematische Querschnittsansicht.

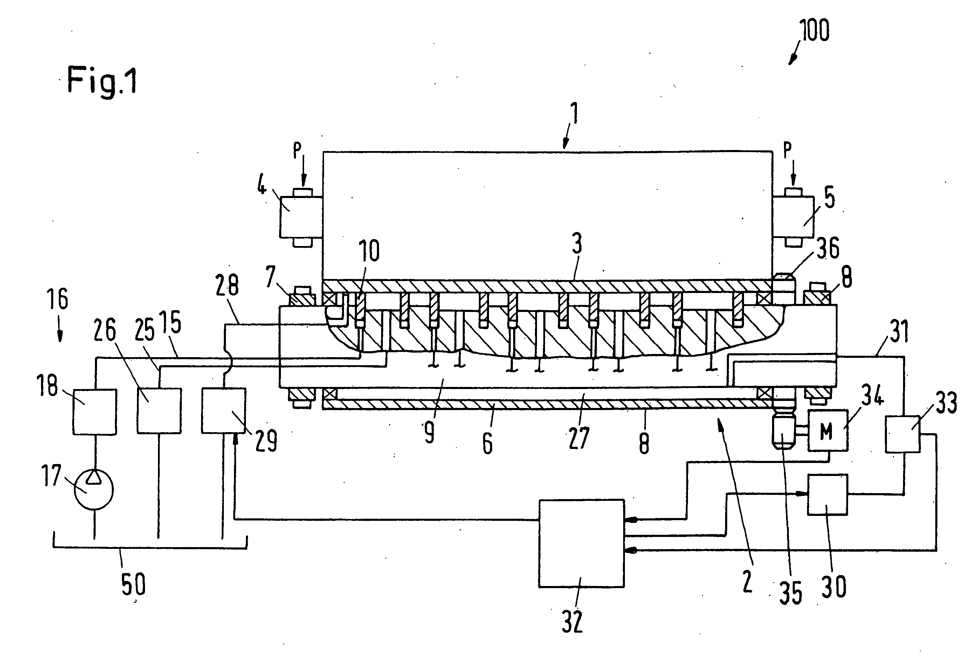

Eine in Fig. 1 dargestellte Walzenanordnung 100 weist eine obere Walze 1 und eine untere Walze 2 auf, die zusammen einen Nip 3 bilden, durch den eine nicht näher dargestellte Warenbahn, beispielsweise eine Papierbahn, mit erhöhtem Druck beaufschlagt werden kann. Die Enden der oberen Walze sind in Lagern 4, 5 gehalten und werden durch eine äußere Kraft P belastet. Durch Anheben der Lager 4, 5 kann der Nip 3 geöffnet werden.

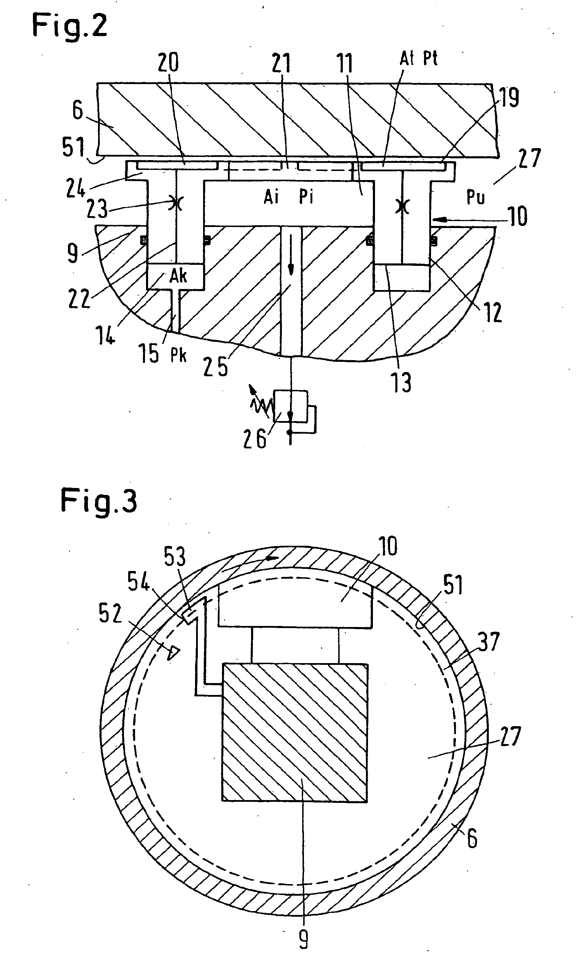

Die untere Walze 2 weist einen Walzenmantel 6 auf, der um einen drehfest in Lagern 7, 8 gehaltenen Träger 9 drehbar ist. Hierbei wird er von Stützelementen 10 abgestützt, wie dies anhand der Fig. 2 noch näher erläutert wird.

Das Stützelement 10 ist ein Ringelement, das einen Innenraum 11 umschließt. Das Stützelement 10 ist in einer Ringnut 12 abgedichtet geführt, die einen durch eine Druckfläche 13 begrenzten Druckraum 14 bildet. Der Druckraum 14 ist über eine Zuleitung 15 mit einer Druckflüssigkeitsquelle 16, die hier durch eine Pumpe 17 und eine Druckregelventilanordnung 18 dargestellt ist, verbunden. Die Pumpe 17 entnimmt Hydraulikflüssigkeit, insbesondere Öl, einem Tank 50.

Das Stützelement 10 weist eine Stützfläche 19 auf, welche der Innenseite 51 des Walzenmantels 6 zugewandt ist und trägt eine ringförmige Tasche 20, die den Innenraum 11 praktisch vollständig umschließt. Sie ist lediglich durch schmale Querstege 21 in Taschenabschnitte unterteilt. Jeder Taschenabschnitt ist über eine Leitung 22, die mit einer Drossel 23 versehen ist, mit dem Druckraum 14 verbunden. Die Tasche 22 weist eine Taschenfläche At auf, die etwas größer ist als eine Druckfläche Ak. Zu diesem Zweck besitzt das Stützelement 10 im Taschenbereich eine Erweiterung 24. Flüssigkeit, die über die Leitung 15 in den Druckraum 14 gefördert wird, erzeugt nicht nur im Druckraum 14 einen Druck, der das Stützelement 10 auf den Walzenmantel 6 hindrückt, sondern die Flüssigkeit wird über die Leitung 22 auch in die Taschen 20 gefördert, so daß sie ein Druckpolster zwischen dem Stützelement 10 und dem Walzenmantel 26 bildet. Der Walzenmantel 6 ist also hydrostatisch auf dem Stützelement 10 gelagert.

Die in die Tasche 22 geförderte Flüssigkeit fließt fortlaufend ab, beispielsweise auch in den Innenraum 11. Der Innenraum 11 weist eine Querschnittsfläche Ai auf. Er ist über eine Ablaufleitung 25, in der ein Drosselorgan 26 angeordnet ist, mit dem Tank 50 verbunden. Über das Drosselorgan 26, das beispielsweise die Form eines einstellbaren Druckhalteventils aufweisen kann, läßt sich ein Druck Pi im Innenraum 11 einstellen. Wenn das Drosselorgan 26 geschlossen ist, dann stellt sich der Druck Pi auf den Druck Pt in den Taschen 20 ein.

Ein Ringraum 27 zwischen dem Träger 9 und dem Walzenmantel 6 ist über eine Abfördereinrichtung 52 (Fig. 3) mit einer Ablaufleitung 28 verbunden, in der ein zweites Drosselorgan 29 angeordnet ist. Auch das zweite Drosselorgan kann die Form eines einstellbaren Druckhalteventils haben.

In Fig. 1 ist lediglich dargestellt, wie ein Stützelement 10 an die Druckflüssigkeitsquelle 16 angeschlossen ist. Für die übrigen Stützelemente 10 können jeweils eigene Druckflüssigkeitsquellen 16 vorgesehen sein, wobei eine gemeinsame Pumpe 17 mit mehreren Druckregelventilanordnungen 18 verbunden sein kann. Die Stützelemente 10 können auch zonenweise zusammengefaßt werden.

Eine Druckgasquelle 30 ist über einen Druckgasanschluß 31 mit dem Ringraum 27 verbunden. Die Druckgasquelle 30 ist in der Lage, im Ringraum 27 einen Druck Pu zu erzeugen. Die Druckgasquelle 30 ist über eine Steuereinrichtung 32 steuerbar. Im Druckgasanschluß 31 ist ein Druckgas-Verbrauchssensors 33 vorgesehen, der ermittelt, welchen Volumenstrom an Sauggas die Druckgasqüelle 30 liefert. Die Druckgasquelle 30 kann beispielsweise als Druckluftkompressor ausgebildet sein. Sie kann aber auch durch ein in den meisten Papierfabriken ohnehin vorhandenes Druckluftnetz gebildet sein, wobei die Druckgasquelle 30 in diesem Fall Möglichkeiten bereitstellt, um den Druck Pu auf einen gewünschten Betrag einzustellen.

Ein Motor 34 treibt über ein Ritzel 35, das an einer Verzahnung 36 am Walzenmantel 6 angreift, den Walzenmantel 6 an. Der Motor 34 kann natürlich auch an der oberen Walze 1 angreifen.

Der sich an den Taschen 20 ausbildende Film der Hydraulikflüssigkeit dichtet nun den Ringraum 27 gegenüber dem Innenraum 11 gasdicht ab, so daß Druckgas aus dem Ringraum 27 nicht in den Innenraum 11 gelangen und von dort über die Ablaufleitung 25 entweichen kann.

Das aus den Drucktaschen 20 austretende Öl gelangt auch in den Innenraum 27. Es bildet dort eine Schicht 37, die in Fig. 3 gestrichelt eingezeichnet ist. Diese Schicht ist in Fig. 3 übertrieben dick dargestellt. In Wirklichkeit soll die Schicht 37 wesentlich kleiner sein. Die Flüssigkeit legt sich bei einem rotierenden Walzenmantel 6 an die Innenseite 51 des Walzenmantels 6 an.

Man kann daher die Flüssigkeits-Abführeinrichtung 52 mit einem Schöpfer 53 versehen, dessen Mündung 54 der Innenseite 51 des Walzenmantels 6 dicht benachbart ist. Der Schöpfer 53 speist in die Ablaufleitung 28. Über das Drosselorgan 29 in dieser Ablaufleitung 28 läßt sich nun die Höhe der Schicht 37 der Hydraulikflüssigkeit einstellen. Dabei ist es nicht unbedingt erforderlich, daß die Mündung 54 vollständig in die Schicht 37 eintaucht. Wie aus Fig. 3 schematisch zu erkennen ist, ist ein kleiner Teilbereich der Mündung 54 freigelassen, so daß Druckgas hier über die Ablaufleitung 28 entweichen kann. Man kann nun den Verbrauch des Druckgases über den Druckgas-Verbrauchssensors 33 erfassen. Mit diesem Wert kann die Steuereinrichtung 32 das Drosselorgan 29 in der Ablaufleitung 28 so steuern, daß die Schicht 37 die Mündung 54 in gewünschter Weise verschließt. Ein gewisser Verbrauch an Druckgas wird ohnehin auftreten, weil sich das Druckgas an die Flüssigkeit in der Schicht 37 bindet.

Wenn man die Schicht 37 so klein wie möglich hält, dann werden Planschverluste kleingehalten, die durch die Flüssigkeitsreibung zwischen dem Walzenmantel 6 und der Flüssigkeit entsteht, und zwar vor allem im Bereich der Stützelemente 10.

Anstelle des Verbrauchs des Druckgases mit Hilfe des Sensors 33 oder zusätzlich läßt sich auch die Antriebsleistung des Motors 34 für die Regelung der Höhe der Schicht 37 verwenden. Je höher die Schicht 37 radial nach innen ansteht, desto größer sind die Planschverluste. Diese Planschverluste müssen durch die Antriebsleistung des Motors 34 ausgeglichen werden. Der Zusammenhang zwischen der Höhe der Schicht 37 und der Antriebsleistung des Motors 34 ist zwar nicht linear, aber eindeutig. Man kann daher anhand der Motorleistung des Motors 34 ebenfalls das Drosselorgan 29 in der Ablaufleitung 28 regeln, um die Höhe der Schicht 37 einzustellen.

Man kann nun, genau wie bei der Ausführungsform nach DE 44 29 499 C1 drei Betriebszustände einstellen. Dabei wird angenommen, daß im Druckraum 14 der Druck Pk, im Innenraum 11 der Druck Pi und im Ringraum 27 der Druck Pu herrscht. In der Tasche 20 herrscht der Druck Pt.
1. Wenn beide Drosselorgane 26 und 29 geöffnet sind, ist Pu = 0, Pi = 0 und Pk > 0. Die Druckgasquelle 30 kann in diesem Fall abgeschaltet sein, d.h. der Walzenmantel 6 wird ausschließlich über die Stützelemente 10 mit Druck beaufschlagt.
   In diesem Fall arbeitet das Stützelement 10 mit einer relativ kleinen resultierenden Druckfläche At, d.h. der Ringfläche des Stützelements 10. Da die Fläche Ai wegen des abfließenden Öls drucklos ist, ergibt sich der Vorteil, daß niedrige Streckenlasten im Nip 3 mit hydraulischhen Drücken gefahren werden können, die nicht unzulässig klein sind, sondern im beherrschbaren Bereich liegen.
2. Wenn das erste Drosselorgan 26 in der Ablaufleitung aus dem Innenraum 11 geschlossen wird, das zweite
   Drosselorgan 29 dagegen geöffnet ist und/oder die
   Druckgasquelle 30 abgeschaltet ist, dann ergibt sich Pu = 0, 0 < Pi ≤ Pt und Pk > 0.
   Weil das über den Innenraum 11 zurückfließende Öl durch das Drosselorgan 26 gedrosselt wird, baut sich im Innenraum ein Druck Pi auf. Dieser wirkt mit der Fläche Ai zusätzlich als Kraft auf den Walzenmantel 6. Bei vollständiger Abdrosselung des rückfließenden Druckmittels aus dem Innenraum 11 stellt sich ein Druck Pi ein, der gleich dem Taschendruck Pt ist. In diesem Fall ist in Abhängigkeit vom Druck Pk die maximale Tragfähigkeit des Stützelements 11 erreicht. Durch die relativ große Gesamtfläche können auch höchste Streckenlasten mit technisch üblichen Öldrücken gefahren werden.
3. Wenn das zweite Drosselorgan 29 geschlossen, das erste Drosselorgan 26 dagegen geöffnet ist, ergibt sich Pu > 0, Pu < Pt < Pk und Pi = 0. Der Druck im Ringraum 27 wird nun ausschließlich über den Druck der Druckquelle 30 gesteuert. Das über den Ringraum 27 rückfließende Druckmittel wird über die Flüssigkeits-Abführeinrichtung 42 abgeführt. Der Druck Pu des Druckgases wirkt also über die gesamte Innenfläche 51 des Walzenmantels 6 mit Ausnahme des Bereichs der ringförmigen Stützelemente 10. Da hier die über den Innenraum abfließende Druckflüssigkeit nicht abgedrosselt wird, wirkt das Stützelement 10 im Sinne einer negativen Kraft auf den Walzenmantel 6, weil auf der gegenüberliegenden Seite eine Kraft resultiert, die gleich dem Produkt aus dem Druck Pu und der Innenfläche Ai ist. Somit kann mit dem Stützelement 10 eine vom Nip 3 weggerichtete Kraft auf den Walzenmantel 6 aufgebracht werden. Beim Einsatz der Stützelemente 10 kann daher auf Gegenstützquellen, welche vom Nip 3 weggerichtet angebracht sind, um eine gewünschte Biegung zu erreichen, verzichtet werden.

Der Walzenmantel 6 kann also gleichzeitig von einem Druckgas, das über den Druckgasanschluß 31 zugeführt wird, und von einer Druckflüssigkeit, die über die Zuleitung 15 den Stützelementen 10 zugeführt wird, beaufschlagt werden. Planschverluste, die im Ringraum 27 durch Druckflüssigkeit entstehen könnte, werden außerordentlich kleingehalten.

## Patentansprüche

1. Biegeausgleichswalze (2) mit einem Walzenmantel (6), der um einen feststehenden Träger (9) drehbar ist, wobei zwischen dem Walzenmantel (6) und dem Träger (9) ein Ringraum (27) ausgebildet ist, und mit einer Druckfluid-betätigten, auf den Walzenmantel (6) wirkenden Druckbeaufschlagungseinrichtung, die einen Druckflüssigkeits-Anschluß (15) und einen Druckgas-Anschluß (31) aufweist, wobei beide Anschlüsse (15, 31) gleichzeitig zur Druckbeaufschlagung des Walzenmantels (6) aktivierbar sind und der Druckgas-Anschluß (31) mit dem Ringraum (27) in Verbindung steht und der Druckflüssigkeits-Anschluß (15) mit mindestens einem Stützelement (10) in Verbindung steht, das zwischen dem Träger (9) und dem Walzenmantel (6) angeordnet ist, **dadurch gekennzeichnet, daß** eine Flüssigkeits-Abführeinrichtung (52) mit dem Ringraum (27) verbunden ist, die eine Steuereinrichtung (32) aufweist, die den Abfluß der Druckflüssigkeit steuert, wobei die Steuereinrichtung (32) mit einem Druckgas-Verbrauchssensor (33) verbunden ist und den Ablauf der Druckflüssigkeit in Abhängigkeit vom Druckgas-Verbrauch regelt und/oder die Steuereinrichtung (32) mit einer Meßeinrichtung verbunden ist, die eine Leistung eines Walzenantriebs (34) ermittelt, und den Ablauf der Druckflüssigkeit in Abhängigkeit von der Leistung regelt.

2. Walze nach Anspruch 1, **dadurch gekennzeichnet, daß** das Stützelement (10) ringförmig ausgebildet ist und einen zum Walzenmantel (6) hin offenen Innenraum (11) umschließt, der mit einer Druckeinstelleinrichtung (26) versehen ist.

3. Walze nach Anspruch 2, **dadurch gekennzeichnet, daß** das Stützelement (10) über eine hydrostatische Lagertaschenanordnung (20) am Walzenmantel (6) anliegt, die eine den Innenraum (11) gegenüber dem Ringraum (27) abdichtende Dichtung bildet.

4. Walze nach einem der Ansprüche 1 bis 3, **dadurch gekennzeichnet, daß** die Flüssigkeits-Abführeinrichtung (52) mindestens einen dem Walzenmantel (6) benachbarten Schöpfer (53) aufweist.

5. Walze nach einem der Ansprüche 1 bis 4, **dadurch gekennzeichnet, daß** die Flüssigkeits-Abführeinrichtung (52) eine Mündung (54) in den Ringraum (27) mit einer vorbestimmten Maximalentfernung zur Innenseite (51) des Walzenmantels (6) aufweist.

6. Verfahren zum Betreiben einer Biegeausgleichswalze (2), die einen um einen feststehenden Träger (9) drehbaren Walzenmantel (6) aufweist, wobei zwischen dem Walzenmantel (6) und dem Träger (9) ein Druck mit einer veränderbaren Verteilung eingestellt wird, bei dem man die Druckverteilung mit Hilfe eines Druckgases, das auf vorbestimmte erste Bereiche des Walzenmantels (6) wirkt, und mit Hilfe einer Druckflüssigkeit, die auf vorbestimmte zweite Bereiche des Walzenmantels (6) wirkt, erzeugt, **dadurch gekennzeichnet, daß** man den Ablauf der Druckflüssigkeit beeinflußt, um die Flüssigkeitsfüllung auf einer vorbestimmten Höhe zu halten, wobei man einen Druckgas-Verbrauch als Kriterium für die Beeinflussung des Ablaufs der Druckflüssigkeit verwendet und/oder man eine Antriebsleistung als Kriterium für die Beeinflussung des Ablaufs der Druckflüssigkeit verwendet.

7. Verfahren nach Anspruch 6, **dadurch gekennzeichnet, daß** das Druckgas in einem Ringraum (27) wirkt, der zwischen dem Walzenmantel (6) und dem Träger (9) ausgebildet ist, wobei die Druckflüssigkeit über mindestens ein Stützelement (10) auf den Walzenmantel (6) wirkt.

8. Verfahren nach Anspruch 7, **dadurch gekennzeichnet, daß** man innerhalb des Stützelements (10) einen Bereich mit gegenüber dem Druck des Druckgases verminderten Druck erzeugt.

9. Verfahren nach Anspruch 7 oder 8, **dadurch gekennzeichnet, daß** man Druckflüssigkeit aus dem Ringraum (27) abschöpft und dabei dafür sorgt, daß der Abfluß von Druckgas aus dem Ringraum (27) unterhalb einer vorbestimmten Grenze bleibt.

10. Verfahren nach Anspruch 9, **dadurch gekennzeichnet, daß** man zum Abschöpfen einen Schöpfer (53) verwendet, dessen Ablauföffnung in einem vorbestimmten Ausmaß von einem Flüssigkeitsfilm abgedeckt ist.

## Claims

1. Controlled deflection roll (2) having a roll shell (6) which can rotate about a stationary support (9), an annular space (27) being formed between the roll shell (6) and the support (9), and having a pressure fluid-actuated pressure loading device which acts on the roll shell (6) and has a pressurized fluid connection (15) and a pressurized gas connection (31), it being possible for both connections (15, 31) to be activated simultaneously to apply pressure to the roll shell (6), and the pressurized gas connection (31) being connected to the annular space (27) and the pressurized fluid connection (15) being connected to at least one supporting element (10) which is arranged between the support (9) and the roll shell (6), **characterized in that** a fluid discharge device (52) is connected to the annular space (27) and has a control device (32) which controls the discharge of the pressurized fluid, the control device (32) being connected to a pressurized gas consumption sensor (33) and regulating the outward flow of the pressurized fluid as a function of the pressurized gas consumption, and/or the control device (32) is connected to a measuring device which determines an output power of a roll drive (34) and regulates the outward flow of the pressurized fluid as a function of the output power.

2. Roll according to Claim 1, **characterized in that** the supporting element (10) is annular and encloses an internal space (11) which is open towards the roll shell (6) and is provided with a pressure setting device (26).

3. Roll according to Claim 2, **characterized in that** the supporting element (10) bears on the roll shell (6) via a hydrostatic bearing pocket arrangement (20) which forms a seal sealing off the internal space (11) with respect to the annular space (27).

4. Roll according to one of Claims 1 to 3,
**characterized in that** the fluid discharge device (52) has at least one bailer (53) adjacent to the roll shell (6).

5. Roll according to one of Claims 1 to 4,
**characterized in that** the fluid discharge device (52) has an opening (54) into the annular space (27) at a predetermined maximum distance from the inside (51) of the roll shell (6).

6. Method of operating a controlled deflection roll (2) which has a roll shell (6) that can rotate about a stationary support (9), a pressure having a variable distribution being established between the roll shell (6) and the support (9), in which the pressure distribution is generated with the aid of a pressurized gas, which acts on predetermined first areas of the roll shell (6), and with the aid of a pressurized fluid, which acts on predetermined second areas of the roll shell (6), **characterized in that** the outward flow of the pressurized liquid is influenced in order to keep the fluid filling at a predetermined level, a pressurized gas consumption being used as a criterion for influencing the outward flow of the pressurized fluid, and/or an output drive power being used as a criterion for influencing the outward flow of the pressurized fluid.

7. Method according to Claim 6, **characterized in that** the pressurized gas acts in an annular space (27) which is formed between the roll shell (6) and the support (9), the pressurized fluid acting on the roll shell (6) via at least one supporting element (10).

8. Method according to Claim 7, **characterized in that**, within the supporting element (10), an area having a pressure that is reduced with respect to the pressure of the pressurized gas is produced.

9. Method according to Claim 7 or 8, **characterized in that** pressurized fluid is scooped out of the annular space (27) and, in the process, care is taken that the output of pressurized gas from the annular space (27) remains below a predetermined limit.

10. Method according to Claim 9, **characterized in that** a bailer (53) is used for the scooping, its outlet opening being covered to a predetermined extent by a film of fluid.

## Revendications

1. Rouleau à compensation de flèche (2) avec une enveloppe de rouleau (6), qui peut tourner autour d'un support stationnaire (9), dans lequel une chambre annulaire (27) est formée entre l'enveloppe de rouleau (6) et le support (9), et avec un dispositif d'application de pression agissant sur l'enveloppe de rouleau (6) et actionné par un fluide sous pression, qui présente un raccord de liquide sous pression (15) et un raccord de gaz sous pression (31), dans lequel les deux raccords (15, 31) peuvent être activés simultanément pour appliquer une pression à l'enveloppe de rouleau (6) et le raccord de gaz sous pression (31) est en communication avec la chambre annulaire (27) et le raccord de liquide sous pression (15) est en communication avec au moins un élément d'appui (10), qui est disposé entre le support (9) et l'enveloppe de rouleau (6), **caractérisé en ce qu'**un dispositif d'évacuation de liquide (52) est relié à la chambre annulaire (27), et présente un dispositif de commande (32) qui commande l'échappement du liquide sous pression, dans lequel le dispositif de commande (32) est relié à un détecteur de consommation de gaz sous pression (33) et régule l'écoulement du liquide sous pression en fonction de la consommation de gaz sous pression et/ou le dispositif de commande (32) est relié à un dispositif de mesure, qui détermine une puissance d'un entraînement de rouleau (34), et régule l'écoulement du liquide sous pression en fonction de la puissance.

2. Rouleau selon la revendication 1, **caractérisé en ce que** l'élément d'appui (10) présente une forme annulaire et entoure une chambre intérieure (11) ouverte en direction de l'enveloppe de rouleau (6), qui est pourvue d'un dispositif de réglage de pression (26).

3. Rouleau selon la revendication 2, **caractérisé en ce que** l'élément d'appui (10) s'applique sur l'enveloppe de rouleau (6) par l'intermédiaire d'un dispositif de poches de paliers hydrostatiques (20), qui forme un joint d'étanchéité assurant l'étanchéité de la chambre interne (11) vis-à-vis de la chambre annulaire (27).

4. Rouleau selon l'une quelconque des revendications 1 à 3, **caractérisé en ce que** le dispositif d'évacuation de liquide (52) comporte au moins un distributeur (53) proche de l'enveloppe de rouleau (6).

5. Rouleau selon l'une quelconque des revendications 1 à 4, **caractérisé en ce que** le dispositif d'évacuation de liquide (52) présente une embouchure (54) dans la chambre annulaire (27) avec un espacement maximal prédéterminé de la paroi intérieure (51) de l'enveloppe de rouleau (6).

6. Procédé de fonctionnement d'un rouleau à compensation de flèche (2), qui comprend une enveloppe de rouleau (6) pouvant tourner autour d'un support stationnaire (9), dans lequel on règle entre l'enveloppe de rouleau (6) et le support (9) une pression avec une répartition variable, dans lequel on produit la répartition de pression à l'aide d'un gaz sous pression, qui agit sur des premières zones prédéterminées de l'enveloppe de rouleau (6), et à l'aide d'un liquide sous pression, qui agit sur des deuxièmes zones prédéterminées de l'enveloppe de rouleau (6), **caractérisé en ce que** l'on influence l'écoulement du liquide sous pression pour maintenir le remplissage de liquide à un niveau prédéterminé, dans lequel on utilise une consommation de gaz sous pression comme critère pour influencer l'écoulement du liquide sous pression et/ou on utilise une puissance d'entraînement comme critère pour influencer l'écoulement du liquide sous pression.

7. Procédé selon la revendication 6, **caractérisé en ce que** le gaz sous pression agit dans une chambre annulaire (27), qui est formée entre l'enveloppe de rouleau (6) et le support (9), dans lequel le liquide sous pression agit sur l'enveloppe de rouleau (6) par l'intermédiaire d'au moins un élément d'appui (10).

8. Procédé selon la revendication 7, **caractérisé en ce que** l'on produit à l'intérieur de l'élément d'appui (10) une zone présentant une pression réduite par rapport à la pression du gaz sous pression.

9. Procédé selon la revendication 7 ou 8,
**caractérisé en ce que** l'on évacue du liquide sous pression hors de la chambre annulaire (27) et on assure en l'occurrence que l'échappement de gaz sous pression hors de la chambre annulaire (27) reste en dessous d'une limite prédéterminée.

10. Procédé selon la revendication 9, **caractérisé en ce que** l'on utilise pour l'évacuation un distributeur (53), dont l'ouverture d'écoulement est masquée dans une certaine mesure par un film de liquide.
